# EUROPÄISCHE PATENTSCHRIFT

(11) **EP 2 966 786 B1**
(45) Veröffentlichungstag und Bekanntmachung des Hinweises auf die Patenterteilung: **05.05.2021**
(21) Anmeldenummer: 15176022.0
(22) Anmeldetag: 09.07.2015
(51) Int. Cl.: H04B 7/155

(54) **RELAY-SENDEEMPFÄNGER, BASISSTATION-SENDEEMPFÄNGER UND ANBINDUNGS-SENDEEMPFÄNGER FÜR EINEN RELAY-SENDEEMPFÄNGER, VERFAHREN UND COMPUTERPROGRAMME FÜR EINEN BASISSTATIONS-SENDEEMPFÄNGER UND EINEN ANBINDUNGS-SENDEEMPFÄNGER**
RELAY TRANSMITTING RECEIVER, BASE STATION TRANSMITTING RECEIVER AND LINK TRANSMITTING RECEIVER FOR A RELAY TRANSMITTING RECEIVER, METHODS AND COMPUTER PROGRAMS FOR A BASE STATION TRANSMITTING RECEIVER AND A LINK TRANSMITTING RECEIVER
ÉMETTEUR-RECEPTEUR DE RELAIS, EMETTEUR-RECEPTEUR DE STATION DE BASE ET EMETTEUR-RECEPTEUR DE LIAISON POUR UN EMETTEUR-RECEPTEUR DE RELAIS, PROCEDE ET PROGRAMME INFORMATIQUE POUR UN EMETTEUR-RECEPTEUR DE STATION DE BASE ET EMETTEUR-RECEPTEUR DE LIAISON

(30) Priorität: 11.07.2014 DE 102014109775
(43) Veröffentlichungstag der Anmeldung: 13.01.2016
(73) Patentinhaber: Nash Innovations GmbH, 90491 Nürnberg (DE)
(72) Erfinder: Fertl, Peter, 80799 München (DE); Wagner, Karl-Ludwig, 90552 Röthenbach (DE)
(74) Vertreter: 2SPL Patentanwälte PartG mbB

(56) Entgegenhaltungen:
- EP-A1- 2 830 356
- WO-A1-2014/082473
- US-A1- 2007 155 314
- US-A1- 2010 284 446
- US-A1- 2014 192 781

## Beschreibung

### Technisches Gebiet

Ausführungsbeispiele befassen sich mit einem Relay-Sendeempfänger, einem Basisstations-Sendeempfänger und einem Anbindungs-Sendeempfänger für einen Relay-Sendeempfänger sowie mit Verfahren und Computerprogrammen für einen Basisstations-Sendeempfänger und für einen Anbindungs-Sendeempfänger, insbesondere aber nicht ausschließlich, auf Nachbarzelldetektion in einem mobilen Relay-Sendeempfänger in zellularen Mobilfunksystemen.

### Hintergrund

Mobilfunksysteme, insbesondere auf zellularer Basis, gibt es bereits seit mehreren Generationen. Die derzeitige Netzwerkplanung und auch die Weiterentwicklung der zellularen Kommunikationssysteme basiert auf stationären Basisstationen, die schnurlose Daten- und Kommunikationsdienste in ihren jeweiligen Abdeckungsbereichen, den sogenannten Zellen, zur Verfügung stellen. Dabei werden mobile Endgeräte zwischen den Zellen weitergereicht, auch engl. "handover". Um dies zu gewährleisten, können beispielsweise Nachbarzelllisten konfiguriert und administriert werden, was bei zunehmender Zelldichte einen zunehmenden Aufwand darstellt, insbesondere wenn neue Zellen hinzukommen. Die Verwaltung und Erstellung solcher Nachbarzelllisten ist insbesondere dann komplex, wenn Mobilfunksysteme mehrerer Generationen, wie beispielsweise der zweiten Generation (2G), der dritten Generation (3G) und der vierten Generation (4G), überlappend zu einander implementiert werden.

Beispielsweise in Mobilfunksystemen der neueren Generation, auch Langzeitentwicklung oder engl. "Long Term Evolution (LTE)", kann es zur Herausforderung für einen Betreiber eines Mobilfunksystems werden, wenn zusätzlich oder überlappend zu den implementierten Nachbarzellen des LTE-Systems, d.h. den sogenannten eNodeBs (eNB), auch Nachbarzellen eines 2G-Systems, eines 3G-Systems, und womöglich eines anderen Standards, wie z.B. Code Division Multiple Access (CDMA) 2000, vorhanden sind.

Im Bereich der schon eingeführten heterogenen Netzwerkstrukturen gibt es kleine Zellen, auch engl. "small cells", die zur Erweiterung der Netzwerkkapazitäten eingesetzt werden und die im Vergleich zu den zumeist anfänglich flächendeckend implementierten Makrozellen, auch engl. "macro cells", einen kleineren Abdeckungsbereich haben. Dabei sehen manche Konzepte vor, auch den Innenraum eines Kraftfahrzeugs mit einer sogenannten mobilen kleinen Zelle, die auch Femtozelle oder engl. "femto cell" genannt wird, zu versorgen. In dem Kraftfahrzeug befindliche Mobilfunkendgeräte buchen sich dann bei dieser Femtozelle ein, die rückseitig wiederum über eine Funkverbindung mit einer Basisstation des Mobilfunksystems kommuniziert und somit für eine Anbindung der Femtozelle an das Mobilfunksystem sorgt. In diesem Zusammenhang wird auch von mobiler Relaystation oder mobilem Relay-Sendempfänger gesprochen.

Auch hierbei können Nachbarzellmessungen durchgeführt werden, indem die Mobilfunkendgeräte im Inneren des Kraftfahrzeugs entsprechend konfiguriert werden. Die Mobilfunkendgeräte teilen diese Messergebnisse dann der Femto-Basisstation mit, die entsprechende Weiterreichungsmaßnahmen oder Handover einleiten kann. Darüber hinaus sind in der Standardisierung, z.B. im 3GPP (Third Generation Partnership Project), Konzepte bekannt, die zu sogenannten selbstorganisierenden Netzwerken führen, auch engl. "Self Organizing Network (SON) techniques". Diese selbstorganisierenden Netzwerkkonzepte können die manuelle Verwaltung der Nachbarschaftsbeziehungen zwischen den Zellen der ein oder mehreren Mobilfunknetze erleichtern bzw. ersetzen. Ein bekanntes Konzept ist die sogenannte automatische Nachbarbeziehungdetektion, auch engl. "Automatic Neighbour Relation (ANR)", in Mobilfunksystemen der neueren Generation.

Z.B. in LTE-Systemen sind ANR-Konzepte spezifiziert, vgl. z.B. 3GPP Release 9 Technical Specification (TS) 36.300, Evolved-Universal To Restoral Radio Access (E-UTRA) and Evolved-Universal Terrestrial Radio Access Network (E-UTRAN), Overall Description; Stage 2. Ähnliche Konzepte können auch in 3GPP TS 25.484 Version 10.0.0 Release 10; Universal Mobile Telecommunication System (UMTS); Automatic Neighbour Relation (ANR) for UTRAN; Stage 2, gefunden werden. Damit verbundene Signalisierungskonzepte gehen beispielsweise aus 3GPP TS 36.331 Version 10.7.0 Release 10; LTE; Evolved-Universal Terrestrial Radio Access (E-UTRA); Radio Resource Control (RRC); Protocol Specification, hervor.

Diese Konzepte können wie bereits oben beschrieben im Bereich der mobilen Relay-Stationen verwendet werden. Eine solche mobile Relay-Station kann beispielsweise einem Femtozell-Basisstations-Sendeempfänger entsprechen der in einem Kraftfahrzeug installiert ist. Die dieser Femtozelle zugeordneten Mobilfunkendgeräte können für diesbezügliche Messungen konfiguriert werden und entsprechende Messergebnisse an die Femtozelle übermitteln. Die Femtozelle ist dann wiederum an eine fest installierte Basisstation des darüber liegenden Netzes angebunden.

Die Druckschrift US 2010/0284446 A1 beschreibt ein Konzept für ein Multi-Hop-Netzwerk in einem Mobilkommunikationssystem. Mehrere verkettete Relay-Stationen generieren dabei eigene Zellen zur direkten Versorgung von Mobilfunkgeräten und sind darüber hinaus angepasst, um Signale von und an andere(n) Relay-Stationen weiterzuleiten. Das Dokument US 2007/0155314 A1 beschäftigt sich mit einer Relaystation zur Vermittlung von Signalen zwischen einem Mobilgerät und einer Basisstation, wobei die Vermittlung über eine weitere Funkstrecke in einem anderen Band durchgeführt wird. Die Druckschrift US 2014/0192781 A1 offenbart ein Mobilitätskonzept für eine mobile Relay-Station, die sich in einem Zug befindet. Das Dokument WO 2014/082473 A1 offenbart zur Nachbarzelldetektion ein Konzept, bei dem eine mobile Relaystation an dafür vorgesehenen Stationen Aktualisierungen zu verfügbaren Nachbarzellen erhält. Die Druckschrift EP 2 830 356 A1 beschreibt ein Konzept zur Konfiguration von Nachbarzellmessungen in einer mobilen Relaystation basierend auf einem Bewegungszustand der mobilen Relaystation.

### Zusammenfassung

Ausführungsbeispiele der vorliegenden Erfindung basieren auf dem Kerngedanken ein verbessertes Konzept zur Nachbarzelldetektion für einen mobilen Relay-Sendeempfänger zu schaffen. Ausführungsbeispielen der vorliegenden Erfindung liegt die Erkenntnis zugrunde, dass bei bekannten Konzepten für mobile Relay-Sendeempfänger Mobilfunkendgeräte, die einem solchen zugeordnet sind, eine Vielzahl von Messungen durchführen und Messergebnisse berichten, auch in Situationen, in denen ein Handover nicht in Frage kommt. Bewegt sich beispielsweise ein Kraftfahrzeug mit hoher Geschwindigkeit über eine Autobahn, so kann mit großer Wahrscheinlichkeit ausgeschlossen werden, dass ein Handover zu einer darüber liegenden Makrozelle durchzuführen ist. Daher kann in einem solchen Fall der Signalisierungsaufwand, der notwendig ist, um die Messung von den Mobilfunkendgeräten an die Femtozelle mitzuteilen, ineffizient sein. Ausführungsbeispielen der vorliegenden Erfindung liegt ferner die Erkenntnis zugrunde, dass solche Messungen auch durch einen Anbindungs-Sendeempfänger durchgeführt werden können.

In anderen Worten basieren Ausführungsbeispiele der vorliegenden Erfindung auf dem Kerngedanken, dass ein Relay-Sendeempfänger aufgeteilt werden kann in einen Anbindungs-Sendeempfänger und einen Basisstations-Sendeempfänger. Der Basisstations-Sendeempfänger generiert einen mobilen Abdeckungsbereich, in dem sich Mobilfunkendgeräte mit dem Basisstations-Sendeempfänger verbinden können. Der Basisstations-Sendeempfänger ist dann mit dem Anbindungs-Sendeempfänger verbunden, um über diesen an eine Basisstation eines darüber liegenden stationären Netzes angebunden zu werden. Ausführungsbeispiele basieren auf der Erkenntnis, dass Messungen auch von dem Anbindungs-Sendeempfänger durchgeführt werden können, und Messergebnisse an den Basisstations-Sendeempfänger über eine dafür vorgesehene Schnittstelle übermittelt werden können.

Ausführungsbeispiele können so den Vorteil liefern, dass ein Signalisierungsaufwand reduziert werden kann. Gleichzeitig können jedoch eine Nachbarzellliste und entsprechende Messergebnisse bei dem Basisstations-Sendeempfänger bekannt gemacht werden, ohne dass dieser auf die Messungen der Mobilfunkendgeräte angewiesen ist.

Darüber hinaus liegt Ausführungsbeispielen der vorliegenden Erfindung die Erkenntnis zugrunde, dass Messungen, die durch Mobilfunkendgeräte beispielsweise in einem KraftFahrZeug (KFZ)-Innenraum durchgeführt werden, durch die von dem KFZ hervorgerufene Dämpfung verfälscht werden können. So spielt es beispielsweise eine große Rolle, ob ein Mobilfunkendgerät eine Messung mit offenem oder geschlossenem Fenster eines Autos durchführt. Die zusätzliche Dämpfung durch das geschlossene Fenster kann dabei die Messung derart verfälschen, dass ein Handover verspätet bzw. gar nicht durchgeführt wird, und so nach Verlassen des Autos eine Funkverbindung abreißt. Dies kann sich nachteilig auf die Qualität der Dienste des jeweiligen Mobilfunkendgerätes auswirken. Ausführungsbeispiele können Messungen des Anbindungs-Sendeempfängers verwenden, der die zusätzliche Dämpfung durch die Karosserie oder deren Anbauten beispielsweise über eine Dachantenne des Fahrzeugs umgehen kann.

Ausführungsbeispiele stellen daher einen Basisstations-Sendeempfänger für einen Relay-Sendeempfänger in einem Mobilfunksystem bereit. Der Relay-Sendeempfänger umfasst einen Anbindungs-Sendeempfänger zur Kommunikation mit einer Basisstation des Mobilfunksystems. Der Basisstations-Sendeempfänger umfasst eine Sendeempfangseinrichtung, die ausgebildet ist, um einen Abdeckungsbereich zur schnurlosen Kommunikation mit einem Mobilfunkendgerät bereitzustellen. Der Basisstations-Sendeempfänger umfasst ferner eine Schnittstelle, die ausgebildet ist, um mit einem Anbindungs-Sendeempfänger für den Relay-Sendeempfänger zu kommunizieren. Darüber hinaus umfasst der Basisstations-Sendeempfänger eine Kontrolleinrichtung, die ausgebildet ist, um von dem Anbindungs-Sendeempfänger für den Relay-Sendeempfänger über die Schnittstelle Information über Messergebnisse, die auf Messungen von Signalen von Mobilfunkzellen basieren, zu erhalten.

Ausführungsbeispiele schaffen ferner einen Anbindungs-Sendeempfänger für einen Relay-Sendeempfänger in einem Mobilfunksystem. Der Relay-Sendeempfänger umfasst ferner einen Basisstations-Sendeempfänger zur Kommunikation mit einem Mobilfunkendgerät des Mobilfunksystems. Der Anbindungs-Sendeempfänger umfasst eine Sendeempfangseinrichtung, die ausgebildet ist, um schnurlos mit einer Basisstation des Mobilfunksystems zu kommunizieren. Der Anbindungs-Sendeempfänger umfasst ferner eine Schnittstelle, die ausgebildet ist, um mit dem Basisstations-Sendeempfänger des Relay-Sendeempfängers zu kommunizieren. Darüber hinaus umfasst der Anbindungs-Sendeempfänger eine Kontrolleinrichtung, die ausgebildet ist, um über die Sendeempfangseinrichtung Signalmessungen basierend auf Funksignalen von Mobilfunkzellen durchzuführen und dem Basisstations-Sendeempfänger für den Relay-Sendeempfänger über die Schnittstelle Information über Messergebnisse bereitzustellen.

Der Schutzbereich der Erfindung ist durch die unabhängigen Ansprüche definiert. Die abhängigen Ansprüche definieren bevorzugte Ausführungsformen. Aspekte oder Ausführungsformen, die nicht unter den Schutzbereich der Ansprüche fallen, sind nützlich zum Verständnis der Erfindung. Ausführungsbeispiele schaffen ferner einen Relay-Sendeempfänger mit einem Basisstations-Sendeempfänger und einem Anbindungs-Sendeempfänger gemäß der obigen Beschreibung. Darüber hinaus schaffen Ausführungsbeispiele ein Kraftfahrzeug mit einem solchen Relay-Sendeempfänger. In Ausführungsbeispielen kann durch das Zusammenspiel zwischen Anbindungs-Sendeempfänger und Basisstations-Sendeempfänger der Signalisierungsaufwand mit den Mobilfunkendgeräten bzw. die Anzahl der Messungen seitens der Mobilfunkendgeräte reduziert werden. In manchen Ausführungsbeispielen kann dies nicht nur die Signalisierung reduzieren, sondern auch zuverlässigere Messergebnisse liefern, da der Anbindungs-Sendeempfänger ggf. nicht den wechselnden Dämpfungen durch die Karosserie eines Kraftfahrzeugs unterliegt.

In manchen Ausführungsbeispielen kann die Kontrolleinrichtung ferner ausgebildet sein, um anhand der Information über die Messergebnisse eine Nachbarzellliste für eine Zelle des Mobilfunksystems, der der Anbindungs-Sendeempfänger zugeordnet ist, zu erstellen. In anderen Worten können Ausführungsbeispiele den Vorteil bieten, dass der Basisstations-Sendeempfänger mittels der Kontrolleinrichtung eine Nachbarzellliste für Zellen des Mobilfunksystems erstellt, die auf Messungen bzw. Messergebnissen des Anbindungs-Sendeempfängers basiert. Auf der Seite des Anbindungs-Sendeempfängers kann die Kontrolleinrichtung dann ausgebildet sein, um mit den Signalmessungen für eine Mobilfunkzelle Information über eine Identifikation der Mobilfunkzelle zu bestimmen und dem Basisstations-Sendeempfänger über die Schnittstelle Information über die Identifikation bereitzustellen. Der Basisstations-Sendeempfänger kann dann mit der Information über die Identifikation einer Zelle zusammen mit den entsprechenden Messergebnissen die Nachbarzellliste erstellen. In manchen Ausführungsbeispielen kann die Kontrolleinrichtung des Basisstations-Sendeempfängers ferner ausgebildet sein, um in der Nachbarzellliste Funkzellen zu erfassen, deren Messergebnisse eine Signalqualität über einer konfigurierbaren Schwelle anzeigen. In anderen Worten kann in Ausführungsbeispielen die Nachbarzellliste so aufgebaut sein, dass nur Zellen die eine gewisse Signalqualität liefern, d.h. eine solche über einer Schwelle, in die Liste mit aufgenommen werden.

In manchen Ausführungsbeispielen können mehrere Mobilfunksysteme berücksichtigt werden. Die Kontrolleinrichtung des Basisstations-Sendeempfängers kann dann ausgebildet sein, um in der Nachbarzellliste wenigstens eine Zelle eines anderen Mobilfunksystems zu erfassen. Entsprechend kann die Kontrolleinrichtung des Anbindungs-Sendeempfängers ausgebildet sein, um über die Sende-Empfangseinrichtung Signalmessungen basierend auf Funksignalen von zumindest einer Mobilfunkzelle wenigstens eines anderen Mobilfunksystems durchzuführen. Ausführungsbeispiele können so den Vorteil liefern, dass mehrere Mobilfunksysteme aufwandsgünstig bemessen und in der Nachbarzellliste berücksichtigt werden können.

In weiteren Ausführungsbeispielen kann die Kontrolleinrichtung des Basisstations-Sendeempfängers ausgebildet sein, um Konfigurationsinformation bezüglich durchzuführender Messungen zu bestimmen und über die Schnittstelle an den Anbindungs-Sendeempfänger zu übermitteln. Die Kontrolleinrichtung des Anbindungs-Sendeempfängers kann in entsprechender Weise ausgebildet sein, um Kontrollinformation bezüglich durchzuführender Messungen über die Schnittstelle von dem Basisstations-Sendeempfänger zu erhalten. In anderen Worten kann der Basisstations-Sendeempfänger Messungen entsprechend konfigurieren, sodass die Nachbarzellliste entsprechend der Zelldichte, d.h. der Anzahl der empfangbaren Signale des Mobilfunksystems bzw. auch anderer Mobilfunksysteme, angepasst ist.

In manchen Ausführungsbeispielen kann die Schnittstelle als Ethernet-Schnittstelle, vgl. IEEE Norm 802.3, als Wireless Local Area Network (WLAN), vgl. IEEE Normen 802.11, d.h. als Schnurlosschnittstelle, oder als serielle Schnittstelle, wie beispielsweise eine Universal Serial Bus (USB)-Schnittstelle, ausgebildet sein. Die Schnittstellen können entsprechend auf Seiten des Basisstations-Sendeempfängers und des Anbindungs-Sendeempfängers angepasst sein. Ausführungsbeispiele können hier den Vorteil liefern, dass eine standardisierte Schnittstelle zur Kommunikation zwischen dem Basisstations-Sendeempfänger und dem Anbindungs-Sendeempfänger herangezogen werden kann. In weiteren Ausführungsbeispielen kann die Kontrolleinrichtung, sowohl seitens des Basisstations-Sendeempfängers als auch auf Seiten des Anbindungs-Sendeempfängers ausgebildet sein, um über die Schnittstellen mit dem "Internet Protocol Security-Protokoll (IPsec)" zu kommunizieren. Ausführungsbeispiele können so den Vorteil bieten, dass über Schnittstelle kommunizierte Daten verschlüsselt sind und so ein erhöhtes Sicherheitsniveau erzielt werden kann.

In weiteren Ausführungsbeispielen ist der Basisstations-Sendeempfänger für ein Kraftfahrzeug ausgelegt, d.h. der Abdeckungsbereich ist für zumindest einen Innenraum eines Kraftfahrzeugs ausgelegt. In Ausführungsbeispielen kann der Abdeckungsbereich auch einen gewissen Bereich um ein Kraftfahrzeug herum umfassen. Ausführungsbeispiele können so insbesondere für mobile Relay-Sendeempfänger in Kraftfahrzeugen angepasst sein. In weiteren Ausführungsbeispielen kann die Kontrolleinrichtung des Anbindungs-Sendeempfängers ausgebildet sein, um Konfigurationsinformation bezüglich durchzuführender Messungen zu empfangen, Messungen auch dann durchzuführen und zu kommunizieren, wenn keine Datenverbindung mit der Basisstation des Mobilfunksystems aktiv ist, d.h. wenn eine Datenverbindung mit der Basisstation des Mobilfunksystems inaktiv ist. In anderen Worten, können Nachbarzellen-Messungen durch den Anbindungs-Sendeempfänger durchgeführt werden, selbst dann, wenn keine Datenverbindung existiert, z.B. wenn kein Mobilfunkendgerät im Inneren des Kraftfahrzeugs Daten mit der Basisstation auszutauschen hat. Dadurch kann auch im inaktiven Zustand dieser Mobilfunkendgeräte eine Nachbarzellliste aufwandsgünstig geführt werden. Insbesondere können Messungen und Messberichte auf Seiten der Mobilfunkendgeräte durch die von dem Anbindungs-Sendeempfänger durchgeführten Messungen eingespart werden, sodass eine Batterielaufzeit erhöht und Ressourcen der Mobilfunkendgeräte geschont werden können.

Ausführungsbeispiele schaffen ferner ein Verfahren für einen Basisstations-Sendeempfänger eines Relay-Sendeempfängers in einem Mobilfunksystem. Der Relay-Sendeempfänger umfasst einen Anbindungs-Sendeempfänger zur Kommunikation mit einer Basisstation des Mobilfunksystems. Das Verfahren umfasst ein Bereitstellen eines Abdeckungsbereichs zur schnurlosen Kommunikation mit einem Mobilfunkendgerät und ein Kommunizieren mit einem Anbindungs-Sendeempfänger für den Relay-Sendeempfänger. Das Verfahren umfasst ferner ein Erhalten von Information über Messergebnisse, die auf Messungen von Signalen von Mobilfunkzellen basieren, von dem Anbindungs-Sendeempfänger des Relay-Sendeempfängers.

Ausführungsbeispiele schaffen ferner ein Verfahren für einen Anbindungs-Sendeempfänger eines Relay-Sendeempfängers in einem Mobilfunksystem. Der Relay-Sendeempfänger umfasst einen Basisstations-Sendeempfänger zur Kommunikation mit einem Mobilfunkendgerät des Mobilfunksystems. Das Verfahren umfasst ein schnurloses Kommunizieren mit einer Basisstation des Mobilfunksystems und ein Kommunizieren mit dem Basisstations-Sendeempfänger für den Relay-Sendeempfänger. Das Verfahren umfasst ferner eine Durchführung von Signalmessungen basierend auf Funksignalen von Mobilfunkzellen und ein Bereitstellen von Information über Messergebnisse an den Basisstation-Sendeempfänger des Relay-Sendeempfängers.

Ausführungsbeispiele schaffen ferner ein Computerprogramm zur Durchführung zumindest eines der oben beschriebenen Verfahren, wenn das Computerprogramm auf einem Computer, einem Prozessor oder einer programmierbaren Hardwarekomponente abläuft. Ausführungsbeispiele schaffen auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

### Figurenkurzbeschreibung

Ausführungsbeispiele werden nachfolgend bezugnehmend auf die beiliegenden Figuren näher erläutert. Es zeigen:
Fig. 1 ein Ausführungsbeispiel eines Relay-Sendeempfängers mit einem Ausführungsbeispiel eines Basisstations-Sendeempfängers und einem Ausführungsbeispiel eines Anbindungs-Sendeempfängers;
Fig. 2 ein Ausführungsbeispiel eines Kraftfahrzeugs mit einem Ausführungsbeispiel eines Relay-Sendeempfängers;
Fig. 3 ein Blockschaltbild einer Implementierung von ANRF in einem Ausführungsbeispiel;
Fig. 4 ein Blockdiagramm eines Ausführungsbeispiels eines Verfahrens für einen Basisstations-Sendeempfänger; und
Fig. 5 ein Blockdiagramm eines Ausführungsbeispiels eines Verfahrens für einen Anbindungs-Sendeempfänger.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

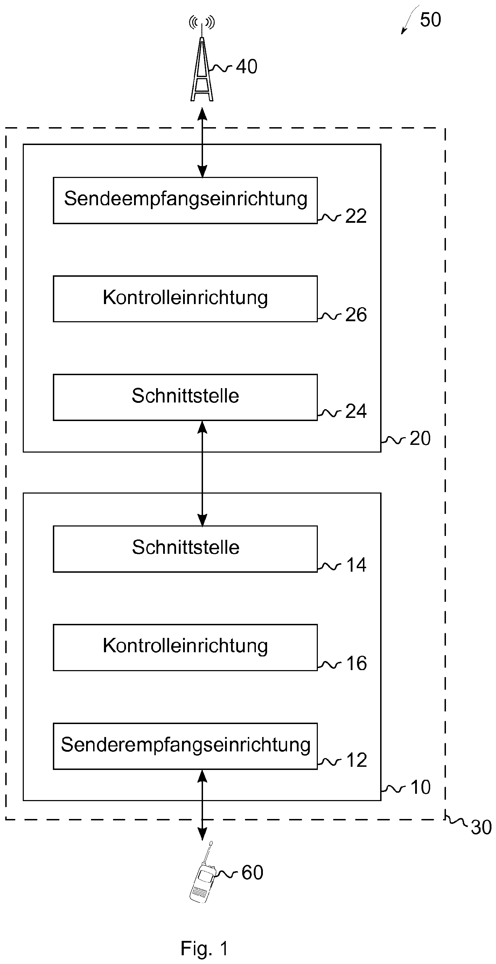

Fig. 1 illustriert ein Ausführungsbeispiel eines Basisstations-Sendeempfängers 10 für einen Relay-Sendeempfänger 30 in einem Mobilfunksystem 50. Der Relay-Sendeempfänger 30 umfasst ferner ein Ausführungsbeispiel eines Anbindungs-Sendeempfängers 20 zur Kommunikation mit einer Basisstation 40 des Mobilfunksystems 50. Der Relay-Sendeempfänger 30 ist in der Fig. 1 mit gestrichelten Linien optional dargestellt, da er die beiden Ausführungsbeispiele des Basisstations-Sendeempfängers 10 und des Anbindungs-Sendeempfängers 20 umfasst, was allgemein in Ausführungsbeispielen nicht zwingend der Fall sein muss.

In Ausführungsbeispielen kann das Mobilfunksystem beispielsweise einem der Mobilfunksysteme entsprechen, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (auch engl. "Time Division Multiple Access (TDMA)"), Frequenzbereichsvielfachzugriffsverfahren (auch engl. "Frequency Division Multiple Access (FDMA)"), Kodebereichsvielfachzugriffsverfahren (auch engl. "Code Division Multiple Access (CDMA)"), Orthogonalen Frequenzbereichsvielfachzugriffsverfahren (auch engl. "Orthogonal Frequency Division Multiple Access (OFDMA)") oder einer anderen Technologie bzw. Vielfachzugriffverfahren basiert. Im Folgenden werden die Begriffe Mobilfunksystem, Mobilfunknetz und Mobilfunknetzwerk synonym benutzt.

Im Folgenden wird angenommen, dass ein solches Mobilfunksystem zumindest einen stationären Sendeempfänger im Sinne einer Basisstation umfasst, der über Anbindung an den leitungsgebundenen Teil des Mobilfunknetzes verfügt. Auf der anderen Seite wird davon ausgegangen, dass das Mobilfunknetz zumindest einen mobilen Sendeempfänger (Mobilfunkendgerät) umfasst, wobei sich der Begriff mobil hier darauf beziehen soll, dass mit diesem Sendeempfänger über die Luftschnittstelle, d. h. kabellos/schnurlos, kommuniziert wird. Ein solcher mobiler Sendeempfänger kann beispielsweise einem tragbaren Telefon, einem Smartphone, einem Tablet-Computer, einem tragbaren Computer oder einem Funkmodul entsprechen, das nicht zwingend mobil in dem Sinne ist, als dass es sich tatsächlich gegenüber seiner Umgebung bewegt. Der Sendeempfänger kann auch stationär sein (z.B. relativ zu einem KFZ), mit dem Mobilfunknetz jedoch drahtlos kommunizieren. Insofern kann die bereits erwähnte Basisstation einer Basisstation einem der oben erwähnten Standards entsprechen, beispielsweise einer NodeB, einer eNodeB, usw.

Ein Basisstations-Sendeempfänger oder eine Basisstation (diese Begriffe können äquivalent verwendet werden) kann ausgebildet sein, um mit einem oder mehreren aktiven Mobilfunkgeräten zu kommunizieren und um in oder benachbart zu einem Versorgungsbereich eines anderen Basisstations-Sendeempfängers oder einer Basisstation zu kommunizieren, z.B. als Makrozell-Basisstation oder als Kleinzell-Basisstation. Somit können Ausführungsformen ein Mobilkommunikationssystem mit einem oder mehreren Mobilfunkendgeräten und einer oder mehreren Basisstationen umfassen, wobei die Basisstations-Sendempfänger Makrozellen oder kleine Zellen bereitstellen können, z. B. Pico- , Metro- oder Femto -Zellen. Ein mobiler Sendeempfänger oder Mobilfunkendgerät kann einem Smartphone (intelligentes Telefon), einem Handy, einem Benutzergerät, einem Funkgerät, einer Mobilen, einer Mobilstation, einem Laptop, einem Notebook, einem Personal Computer (PC), einem Personal Digital Assistant (PDA), einem Universal Serial Bus (USB)-Stick oder-Adapter, einem Auto, etc., entsprechen. Ein mobiler Sendeempfänger kann auch als engl. "User Equipment (UE)" oder Mobile im Einklang mit der 3GPP- Terminologie bezeichnet werden.

Ein Basisstations-Sendeempfänger oder eine Basisstation kann zumindest aus der Sicht eines Mobilfunkendgerätes in einem feststehenden oder zumindest festverbundenen Teil des Netzwerks oder Systems befinden. Ein Basisstation-Sendeempfänger oder eine Basisstation kann auch einem Remote Radio Head, einer Relay-Station, einem Übertragungspunkt, einem Zugriffspunkt (auch engl. "Access Point"), einem Funkgerät, einer Makrozelle, einer kleinen Zelle, einer Mikrozelle, einer Femtozelle, einer Metrozelle usw. entsprechen. Eine Basisstation oder ein Basisstations-Sendeempfänger wird somit als logisches Konzept eines Knotens/einer Einheit zur Bereitstellung eines Funkträgers oder von Funkverbindungen über die Luftschnittstelle verstanden, über den oder die einem Endgerät/mobile Sendeempfänger Zugang zu einem Mobilfunknetz verschafft wird.

Eine Basisstation oder ein Basisstations-Sendeempfänger kann eine drahtlose Schnittstelle für Mobilfunkendgeräte zu einem verdrahteten Netzwerk darstellen. Die verwendeten Funksignale können durch 3GPP standardisierte Funksignale sein oder allgemein Funksignale in Übereinstimmung mit einer oder mehreren der oben genannten Systeme. So kann eine Basisstation oder eine Basisstations-Sendeempfänger einer NodeB, einer eNodeB, einer Base Transceiver Station (BTS), einen Zugangspunkt, einen Remote Radio Head, einem Übertragungspunkt, einer Relaystation, etc. entsprechen, die in weitere Funktionseinheiten unterteilt sein kann.

Ein Mobilfunkendgerät oder mobiler Sendeempfänger kann einer Basisstation oder Zelle zugeordnet werden oder bei dieser registriert sein. Der Begriff Zelle bezieht sich auf einen Abdeckungsbereich der Funkdienste, die durch eine Basisstation bereitgestellt werden, z.B. von einer NodeB (NB), einer eNodeB (eNB), einem Remote Radio Head, einem Übertragungspunkt, eine Relay-Station, etc. Eine Basisstation kann eine oder mehrere Zellen auf einer oder mehreren Trägerfrequenzen bereitstellen. In manchen Ausführungsformen kann eine Zelle auch einem Sektor entsprechen. Z.B. können Sektoren mit Sektorantennen, die zur Abdeckung eines Winkelabschnitts um einen Antennenstandort herum ausgebildet sind, gebildet werden. In einigen Ausführungsformen kann eine Basisstation beispielsweise zum Betrieb von drei oder sechs Zellen oder Sektoren ausgelegt sein (z.B. 120° im Fall von drei Zellen und 60° im Fall von sechs Zellen). Eine Basisstation kann mehrere Sektorantennen umfassen. Im Folgenden können die Begriffe Zelle und Basisstation auch synonym verwendet werden.

Mit anderen Worten kann in den Ausführungsformen das Mobilkommunikationssystem auch ein heterogenes Zellnetzwerk (HetNet) umfassen, das unterschiedliche Zelltypen aufweist, z.B. Zellen mit geschlossenen Nutzergruppen (auch engl. "Close Subscriber Group CSG") und offenen Zellen sowie Zellen unterschiedlicher Größe, wie z.B. Makrozellen und kleine Zellen, wobei der Abdeckungsbereich einer kleinen Zelle kleiner ist als der Abdeckungsbereich einer Makrozelle. Eine kleine Zelle kann einer Metrozelle, einer Mikrozelle, einer Picozelle, einer Femtozelle usw. entsprechen. Die Abdeckungsbereiche der einzelnen Zellen werden durch die Basisstationen für ihre Versorgungsgebiete bereitgestellt und hängen von den Sendeleistungen der Basisstationen und den Interferenzbedingungen in dem jeweiligen Bereich ab. In manchen Ausführungsformen kann Abdeckungsbereich einer kleinen Zelle zumindest teilweise von einem Versorgungsbereich einer anderen Zelle umgeben sein oder teilweise mit dem Versorgungsbereich einer z.B. Makrozelle übereinstimmen oder überlappen. Kleine Zellen können eingesetzt werden, um die Kapazität des Netzwerks zu erweitern. Eine Metrozelle kann daher verwendet werden, um eine kleinere Fläche als eine Makrozelle abzudecken, z.B. werden Metrozellen verwendet, um eine Straße oder einen Abschnitt in einem Ballungsgebiet abzudecken. Für eine Makrozelle kann der Abdeckungsbereich einen Durchmesser in der Größenordnung von einem Kilometer oder mehr haben, für eine Mikrozelle kann der Abdeckungsbereich einen Durchmesser von weniger als einem Kilometer haben und eine Picozelle kann einen Abdeckungsbereich mit einen Durchmesser von weniger als 100m haben. Eine Femtozelle kann den kleinsten Abdeckungsbereich aufweisen und sie kann verwendet werden, um beispielsweise einen Haushalts-, einen KFZ- oder einen Gate-Bereich auf dem Flughafen abzudecken, d.h. ihr Sendegebiet kann einen Durchmesser von unter 50m zu haben.

Wie die Fig. 1 zeigt umfasst das Ausführungsbeispiel des Basisstations-Sendeempfängers 10 eine Sendeempfangseinrichtung 12, die ausgebildet ist, um einen Abdeckungsbereich zur schnurlosen Kommunikation mit einem Mobilfunkendgerät 60 bereitzustellen. In Ausführungsbeispielen kann die Sendeempfangseinrichtung typische Sender- bzw. Empfängerkomponenten enthalten. Darunter können beispielsweise ein oder mehrere Antennen, ein oder mehrere Filter, ein oder mehrere Mischer, ein oder mehrere Verstärker, ein oder mehrere Diplexer, ein oder mehrere Duplexer, usw. fallen.

Die Fig. 1 zeigt ferner, dass der Basisstations-Sendeempfänger 10 eine Schnittstelle 14 aufweist, die ausgebildet ist, um mit einem Anbindungs-Sendeempfänger 20 für den Relay-Sendeempfänger 30 zu kommunizieren. In Ausführungsbeispielen kann die Schnittstelle 14 als beliebige Schnittstelle, die sich für eine solche Kommunikation eignet, ausgebildet sein. Denkbar sind hier beliebige Implementierungen, die den Austausch von Daten bzw. Kontrollinhalten zwischen Anbindungs-Sendeempfänger und Basisstations-Sendeempfänger erlauben. Beispielsweise sind beliebige serielle oder auch parallele Schnittstellen denkbar. In einigen Ausführungsbeispielen kann diese Schnittstelle beispielsweise als Ethernet-Schnittstelle, WLAN-Schnittstelle oder als USB-Schnittstelle ausgebildet sein. In weiteren Ausführungsbeispielen sind jedoch auch beliebige schnurgebundene oder schnurlose Schnittstellen an dieser Stelle denkbar.

Wie die Fig. 1 weiter zeigt, umfasst der Basisstations-Sendeempfänger 10 ferner eine Kontrolleinrichtung 16, die ausgebildet ist, um von dem Anbindungs-Sendeempfänger 20 für den Relay-Sendeempfänger 30 über die Schnittstelle 14 Information über Messergebnisse, die auf Messungen von Signalen von Mobilfunkzellen basieren, zu erhalten. In Ausführungsbeispielen kann die Kontrolleinrichtung einem beliebigen Controller oder Prozessor oder einer programmierbaren Hardwarekomponente entsprechen. Beispielsweise kann die Kontrolleinrichtung 16 auch als Software realisiert sein, die für eine entsprechende Hardwarekomponente programmiert ist. Insofern kann die Kontrolleinrichtung 16 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung der Kontrolleinrichtung 16 denkbar.

Die. Fig. 1 zeigt ferner ein Ausführungsbeispiel eines Anbindungs-Sendeempfängers 20, der ebenfalls im Relay-Sendeempfänger 30 in dem Mobilfunksystem 50 umfasst ist. Auch der Anbindungs-Sendeempfänger 20 umfasst eine Sendeempfangseinrichtung 22, die ausgebildet ist, um schnurlos mit einer Basisstation 40 des Mobilfunksystems 50 zu kommunizieren. Bezüglich etwaiger Implementierungen der Sendeempfangseinrichtung 22 wird auf die oben beschriebene Sendeempfangseinrichtung 12 verwiesen. Hier können entsprechend angepasste Komponenten zum Einsatz kommen, die schnurlose Kommunikation mit der Basisstation 40 des Mobilfunksystems 50 erlauben.

Wie die Fig. 1 ferner zeigt, umfasst der Anbindungs-Sendeempfänger 20 eine Schnittstelle 24, die an die oben beschriebene Schnittstelle 14 angepasst ist und insofern dieser entsprechend implementiert oder ausgelegt sein kann. Die Schnittstelle 24 ist ausgebildet, um mit dem Basisstations-Sendeempfänger 10 des Relay-Sendeempfängers 30 zu kommunizieren. Der Anbindungs-Sendeempfänger 20 umfasst ferner eine Kontrolleinrichtung 26. Die Kontrolleinrichtung 26 kann entsprechend der Kontrolleinrichtung 16 implementiert sein, sodass auch hier programmierbare Komponenten zum Einsatz kommen können. Die Kontrolleinrichtung 26 ist ausgebildet, um über die Sendeempfangseinrichtung 22 Signalmessungen basierend auf Funksignalen von Mobilfunkzellen durchzuführen und dem Basisstations-Sendeempfänger 10 für den Relay-Sendeempfänger 30 über die Schnittstelle 24 Information über Messergebnisse bereitzustellen.

In einem Ausführungsbeispiel ist die Kontrolleinrichtung 16 des Basisstations-Sendeempfängers 10 ausgebildet, um anhand der Information über die Messergebnisse eine Nachbarzellliste für eine Zelle des Mobilfunksystems 50, der der Anbindungs-Sendeempfänger 20 zugeordnet ist, zu erstellen. In anderen Worten verhält sich der Anbindungs-Sendeempfänger 20 ähnlich wie ein Mobilfunkendgerät gegenüber der Basisstation 40 des Mobilfunksystems 50. Der Anbindungs-Sendeempfänger 20 bucht sich oder registriert sich in dem Netz, indem er einen entsprechenden Kommunikationszusammenhang oder Protokollkontext mit der Basisstation 40 erstellt. Die Basisstation stellt dem Anbindungs-Sendeempfänger 20 entsprechende Dienste bereit. Wenn sich der Anbindungs-Sendeempfänger 20 als Teil einer mobilen Relay-Station 30 in dem Mobilfunksystem bewegt, so findet eine Weiterreichung zwischen den einzelnen Zellen statt. Um diese Weiterreichung aufwandsgünstig zu gewährleisten, kann die Basisstation 40 beispielsweise eine Nachbarzellliste für den Anbindungs-Sendeempfänger 20 erstellen. In Ausführungsbeispielen kann der Basisstations-Sendeempfänger 10 über die Messungen des Anbindungs-Sendeempfängers 20 auch eine Nachbarzellliste für etwaige Mobilendgeräte 60 erstellen, die dem Basisstations-Sendeempfänger 10 zugeordnet sind, in gleicher Weise wie der Anbindungs-Sendeempfänger 20 der Basisstation 40 zugeordnet ist.

In manchen Ausführungsbeispielen kann eine ANR-Funktion (engl. "Automatic Neighbour Relation (ANR)") zum Einsatz kommen. Diese kann beispielsweise in einer Basisstation 40, z.B. einer eNodeB oder auch dem Basisstations-Sendeempfänger 10 implementiert sein und eine Nachbarzellbeziehungstabelle erstellen, auch engl. "Neighbour Relation Table (NRT)". Eine Nachbarzelldetektionsfunktion, die im Rahmen der ANR implementiert ist, kann neue Nachbarzellen finden und diese zu einer NRT hinzufügen. Ebenso kann die ANR-Funktion auch eine Nachbarzelllöschungsfunktion umfassen, die Nachbarzellen aus der NRT wieder streicht, wenn diese nicht mehr aktuell sind. In Ausführungsbeispielen können die Nachbarzelldetektion und die Nachbarzelllöschung je nach den Gegebenheiten variieren. Beispielsweise kann eine existierende Nachbarzellbeziehung, auch engl. "Neighbour Cell Relation (NR)", von einer Quellzelle zu einer Zielzelle bedeuten, dass eine Basisstation, die die Quellzelle kontrolliert, z.B. eine eNodeB-Identifikationsinformation über die Zielzelle speichert, wie beispielsweise Kennungen oder auch z.B. engl. "Cell Global Identifier (CGI)/E-UTRAN CGI (ECGI)" oder eine physikalische Zellidentifikation, auch engl. "Primary Scrambling Code (PSC)/Physical Cell Identifier (PCI)" der Zielzelle.

Dies kann im Rahmen entsprechender Einträge der NRT der Quellzelle zur Identifikation der Ziel- oder Nachbarzelle erfolgen. In einigen Ausführungsbeispielen kann für jede Zelle einer Basisstation eine eigene NRT bestehen. Für jede Nachbarzellbeziehung kann die NRT eine Nachbarzellkennung umfassen, z.B. engl. einen "Target Cell Identifier (TCI)", der die Zielzelle identifiziert. In einem E-UTRAN kann die TCI beispielsweise der ECGI und der PCI der Zielzelle entsprechen. In anderen Worten kann in Ausführungsbeispielen die Nachbarzellliste entsprechende Zellidentifikationen umfassen, wie z.B. CGIs, ECGIs, PCIs, usw. In Ausführungsbeispielen kann die Kontrolleinrichtung 26 des Anbindungs-Sendeempfängers 20 entsprechend ausgebildet sein, um mit den Signalmessungen für eine Mobilfunkzelle Information über eine Identifikation der Mobilfunkzelle zu bestimmen und dem Basisstations-Sendeempfänger 10 über die Schnittstelle 24 Information über die Identifikation bereitzustellen.

In Ausführungsbeispielen können dabei Messungen innerhalb des gleichen Mobilfunksystems 50 und innerhalb der gleichen Trägerfrequenz durchgeführt werden. Z.B. kann eine Basisstation 40 oder ein Basisstations-Sendeempfänger 10, der eine ANR-Funktion umfasst, jedes Mobilfunkendgerät 60 oder auch den Anbindungs-Sendeempfänger 20 dazu anweisen, entsprechende Messungen durchzuführen. Diese Messungen können dabei auch das Auslesen von Systeminformation (SI) der Nachbarzellen umfassen. Dies kann beispielsweise im Rahmen der normalen Ressourcenverwaltung und Signalisierung geschehen, vgl. auch 3GPP TS 36.331 oder TS 25.331, wie oben beschrieben. Eine Basisstation kann dabei verschiedene Strategien benutzen, um ein Mobilfunkendgerät mit den entsprechenden Messungen zu konfigurieren und hat mehrere Möglichkeiten wann Messergebnisse an die Basisstation berichtet werden. Wenn ein Mobilfunkendgerät eine Neuzelle oder eine neue ECGI findet, kann das Mobilfunkendgerät das entsprechend gefundene ECGI an die dem Mobilfunkendgerät zugeordnete Basisstation/Zelle berichten. Zusätzlich kann das Mobilfunkendgerät auch eine Kennung eines Verfolgungsgebiets bereitstellen, z.B. auch engl. "Tracking Area Code", oder eine Netzkennung, z.B. engl. "Public Land Mobile Network (PLMN) Identification (ID)", die im Rahmen der Messungen detektiert werden. Die Basisstation kann diese entsprechenden Nachbarzellbeziehungen dann in der Nachbarzellliste, z.B. dem NRT, aufnehmen.

In einigen Ausführungsbeispielen kann die Kontrolleinrichtung 16 des Basisstations-Sendeempfängers 10 auch ausgebildet sein, um in der Nachbarzellliste Funkzellen zu erfassen, deren Messergebnis eine Signalqualität über einer konfigurierbaren Schwelle anzeigt. Dabei können beispielsweise Signal-zu-Rauschverhältnisse, Signal-zu-Rausch-und-Interferenzverhältnisse, Empfangsleistungen, Empfangspegel, usw. bestimmt werden. Insbesondere können hierzu zählen ein Empfangssignalpegelindikator, auch engl. "Receive Signal Strength Indicator (RSSI)", eine Empfangsleistung eines bestimmten Signals auch engl. "Receive Signal Code Power (RSCP)", eine Bit-Energie Eb im Verhältnis zu einer Rauschleistungsdichte No, ein Signal-zu-Interferenz-Verhältnis, auch engl. "Signal-to-Interference Ratio (SIR)", eine Signal-zu-Rauschverhältnis, auch engl. "Signal-to-Noise Ratio (SNR)", ein Signal-zu-Rausch-und-Interferenzverhältnis, auch engl. "Signal-to-Noise- and-Interference Ratio (SINR)", usw. In anderen Worten können diese Größen anhand der Funksignale einer Zelle gemessen werden und mit entsprechenden Schwellen, auch engl. "thresholds", verglichen werden. Beispielsweise kann eine Messung derart konfiguriert werden, dass Messergebnisse berichtet werden, sobald eine Schwellwertüberschreitung stattfindet.

In weiteren Ausführungsbeispielen kann der Basisstations-Sendeempfänger 10 auch ausgebildet sein, um Zellen eines anderen Mobilfunksystems zu vermessen. Das andere Mobilfunksystem kann insofern einem anderen Zugriffsverfahren, eine andere Frequenz, einem anderen Standard, usw. unterworfen sein. In anderen Worten kann die Nachbarzellliste wenigstens eine Zelle eines anderen Mobilfunksystems umfassen. Entsprechend kann die Kontrolleinrichtung 26 des Anbindungs-Sendeempfängers 20 ausgebildet sein, um mit den Signalmessungen für eine Mobilfunkzelle Information über eine Identifikation der Mobilfunkzelle zu bestimmen und dem Basisstations-Sendeempfänger 10 über die Schnittstelle 24 Information über die Identifikation bereitzustellen. Die Identifikation kann sich dabei auch auf Zellen des anderen Mobilfunksystems beziehen. In anderen Worten kann die Kontrolleinrichtung 26 des Anbindungs-Sendeempfängers 20 ferner ausgebildet sein, um über die Sendeempfangseinrichtung 22 Signalmessungen basierend auf Funksignalen von zumindest einer Funkzelle wenigstens eines anderen Mobilfunksystems durchzuführen.

Insofern kann eine Basisstation mit ANR-Funktion Mobilfunkendgeräte instruieren, Messungen und Zelldetektionen an anderen Zugrifftechnologien, auch engl. "Radio Access Technologies (RATs)", oder Frequenzen durchzuführen. Üblicherweise geschieht das immer dann, wenn auch eine aktive Verbindung zwischen einem Mobilfunkendgerät und dem Netz aufgebaut ist. In einigen Ausführungsbeispielen können diese Messungen jedoch auch dann durchgeführt werden, wenn keine aktive Verbindung aufgebaut ist, wie im Folgenden noch im Detail erläutert werden wird. Eine Basisstation kann verschiedene Strategien benutzen, um die Mobilfunkendgeräte für die Messungen, insbesondere Messungen an anderen Mobilfunksystemen zu konfigurieren. Insbesondere kann auch die Art der Berichterstattung, d.h. wann und wie Messergebnisse an die Basisstation übermittelt werden sollen entsprechend konfiguriert werden. Beispielsweise kann ein Mobilfunkendgerät die PCI in den jeweiligen Zielzugriffssystemen oder Frequenzen detektieren und berichten.
Wenn die Basisstation von den Mobilfunkendgeräten entsprechende Berichte mit PCI's der neuen Zellen empfängt, kann die Basisstation im Gegenzug das Mobilfunkendgerät entsprechend instruieren ECGI oder den Code eines Vermittlungsbereichs, auch engl. "Routing Area Code (RAC)", der detektierten Nachbarzelle, beispielsweise im Fall eines GERANs zu berichten. Im Falle eines UTRANs kann ein solcher Messbericht auch die CGI, die LAC, von engl. "Location Area Code (LAC)" und die RAC der detektierten Zellen umfassen. Selbiges gilt in Ausführungsbeispielen für die Kommunikation zwischen dem Basisstations-Sendempfänger 10 und dem Anbindungs-Sendeempfänger 20 über die Schnittstellen 14 und 24.

Bei Interfrequenzmessungen kann die Basisstation auch das Mobilfunkendgerät direkt instruieren, die ECGI, TAC, von engl. "Tracking Area Code", und die verfügbaren PLMN IDs (Identifikationen) der jeweiligen Zellen zu berichten.
Die Basisstation kann dann entsprechend in der Nachbarzellliste die Inter-Frequenz/Nachbarzellbeziehungen, ggf. auch in einer dafür separat vorgesehenen Tabelle oder in systemspezifischen Tabellen, notieren, nachdem die entsprechende Information vom Mobilfunkendgerät empfangen wurde. Fest installierte kleine Zellen (Small Cells) ermitteln ihre Nachbarbeziehungen, beispielsweise diese umgebende Makrozellen oder andere kleine Zellen, auf regelmäßiger Basis, um in der Lage zu sein, eine schnelle Weiterreichung von Mobilfunkendgeräten zu einer Nachbarzelle zu ermöglichen. Nachdem sich aber insbesondere die Makrozellumgebung von Zeit zu Zeit ändern kann, benutzt die kleine Zelle zur Beurteilung ihrer Nachbarbeziehungen eine Abhörprozedur, sofern diese aktiviert ist und führt diese meist während der Nacht durch. Beispielsweise 3GPP technische Empfehlung (auch engl. "Technical Recommendation (TR)) 36.921 FDD Home eNodeB (HeNB) Radio Frequency (RF) Requirements Analysis", beschreibt eine solche Prozedur mit entsprechender Leistungskontrolle, die insbesondere zur Erkennung von Nachbarzellen benutzt werden kann.

Zur Abdeckung innerhalb von Fahrzeugen, beispielsweise von Autos, Bussen, Zügen, Schiffen, usw. ist zu berücksichtigen, dass diese sich durch stets verändernde Hochfrequenz- oder Abdeckungsbedingungen bewegen, und dass durch die zumeist metallenen Karosserien zusätzliche Dämpfungen hervorgerufen werden. Aus diesem Grund werden Kunden, die ihre Endgeräte, wie beispielsweise Smartphones oder Tablet-Computer, in diesen Kraftfahrzeugen benutzen zunächst Einbußen der Signalqualität und damit bei der Dienstqualität erfahren. Um diese Dienstqualität in zellularen Abdeckungsbereichen innerhalb von Fahrzeugen zu verbessern, kann wie bereits oben beschrieben, eine mobile Relay-Station oder ein mobiler Relay-Sendeempfänger 30 benutzt werden, um mehrere Mobilfunkendgeräte 60 innerhalb eines Fahrzeugs an ein Netzwerk 50 anzubinden. Dabei kann eine gebündelte Verbindung mit dem stationären zellularen Mobilfunksystem 50 über eine schnurlose Anbindungsverbindung 20 an das stationäre Mobilfunknetz 50 erfolgen.

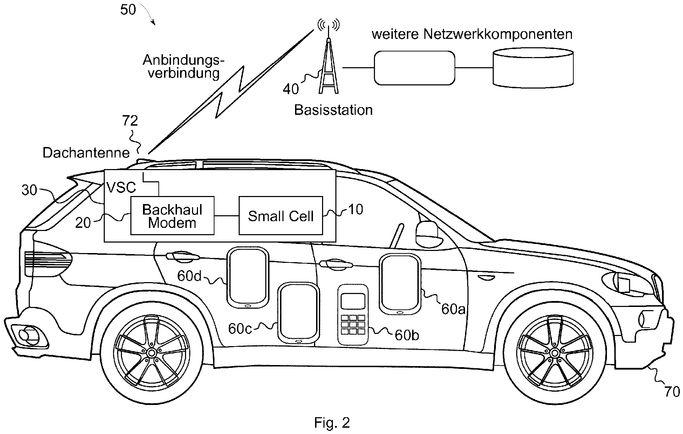

Fig. 2 zeigt ein Ausführungsbeispiel eines Kraftfahrzeugs 70, das ein Ausführungsbeispiel des Relay-Sendeempfängers 30 umfasst. Wie die Fig. 2 zeigt, befinden sich im Innenraum des Fahrzeugs vier Mobilfunkendgeräte 60a, 60b, 60c und 60d. Diese Mobilfunkendgeräte 60a-d entsprechen vier Mobilfunkendgeräten von vier Insassen. Der Relay-Sendeempfänger 30 umfasst einen Basisstations-Sendeempfänger 10, der den Innenraum des Kraftfahrzeugs 70 versorgt und vorliegend als "small cell" oder Femtozelle 10 ausgeführt ist. Der Basisstations-Sendeempfänger 10 umfasst demnach einen Abdeckungsbereich, der für zumindest den Innenraum des Kraftfahrzeugs 70 ausgelegt ist. Die Verbindung zwischen den Mobilfunkendgeräten 60a-d und dem Basisstations-Sendeempfänger 10 wird auch als Zugriffsverbindung, auch engl. "Access Link", bezeichnet. Der Abdeckungsbereich des Basisstations-Sendeempfängers 10 entspricht in diesem Ausführungsbeispiel einer kleinen Zelle, "Small Cell" 10. Der mobile Relay-Sendeempfänger 30 umfasst ferner einen Anbindungs-Sendeempfänger 20, der die Anbindung zu den fest installierten Komponenten des Mobilfunksystems 50 herstellt. Wie die Fig. 2 zeigt, sind der Basisstations-Sendeempfänger 10 und der Anbindungs-Sendeempfänger 20 miteinander gekoppelt und bilden so den Relay-Sendeempfänger 30.

Dieser verfügt beispielsweise über eine Dachantenne 72, die an dem Fahrzeug angebracht ist. Über die Dachantenne 72 können nun schnurlos Radiosignale mit der Basisstation 40 ausgetauscht werden, die ihrerseits mit weiteren Netzwerkkomponenten gekoppelt ist. Die weiteren Netzwerkkomponenten können beispielsweise Schnittstellen umfassen, die insbesondere für kleine Zellen angepasst sind, z.B. auch engl. "Small Cell Gateway", sowie andere Komponenten des Kernnetzwerks, auch engl. "Core Network". Insgesamt bildet das Kraftfahrzeug 70 mit dem Relay-Sendeempfänger 30 eine mobile Kleinzelle, die im Folgenden auch als engl. "Vehicular Small Cell (VSC)-System" 30 genannt wird. Wie die Fig. 2 weiter zeigt, ist die Verbindung zwischen der stationären Basisstation 40 und der Dachantenne 72 des VSC auch als Anbindungsverbindung, auch engl. "Backhaul Link", bezeichnet. Die Verbindung zwischen der VSC 30 und den Endgeräten 60a-d der Nutzer, auch engl. "User Equipments (UEs)", im Innenraum des Kraftfahrzeugs 70 wird auch als Zugriffsverbindung, von engl. "Access Link", bezeichnet. Die Mobilfunkgeräte 60a bis 60d verbinden sich mit dem VSC 30 und werden insofern im Folgenden auch als VSC-UEs 60a-d bezeichnet. Ein Mobilfunkendgerät, welches sich direkt mit der Makrobasisstation 40 verbindet, wird auch als M-UE bezeichnet.

Wie die Fig. 2 zeigt, umfasst die VSC 30 die Kleinzelle 10, die den Abdeckungsbereich für die Mobilfunkendgeräte 60a-d bereitstellt und einen Anbindungs-Sendeempfänger 20, als "Backhaul"-Modem, der sich gegenüber der Basisstation 40 zumindest teilweise wie ein M-UE verhält, und schnurlos die Anbindung zu der Makrobasisstation 40 gewährleistet. Es ist zu beachten, dass für die Anbindungsverbindung und die Zugriffsverbindung gleiche oder auch verschiedene Frequenzen oder Spektren verwendet werden können, sowie gleiche oder verschiedene Zugriffstechnologien.

In der folgenden Beschreibung wird die Bezeichnung "Small Cell" auch als Synonym für die Bezeichnung "Home (e)NodeB", im Sinne von (e)NodeB oder Basisstation für Zuhause, verwendet, entsprechend den Standards des 3GPP für E-UTRAN, LTE, bzw. entsprechend den 3GPP-Standards für UTRAN, UMTS. In Ausführungsbeispielen können beispielsweise UMTS und LTE als Zugriffstechnologien vorkommen. In anderen Ausführungsbeispielen können auch andere oder zukünftige Zugriffstechnologien, wie beispielsweise solche der fünften Generation, vgl. 5GPP (fünfte Generation), verwendet werden.

Für mobile Relay-Sendeempfänger 30 ist es ggf. nicht ausreichend in größeren Zeitabständen nach Nachbarzellen zu suchen, da insbesondere in Kraftfahrzeugen montierte Relay-Sendeempfänger 30 ihre Position und damit die Funkumgebung schnell verändern. Dies würde dazu führen, dass das Suchen nach entsprechenden Nachbarzellen ständig durchgeführt werden müsste, um die jeweilig aktuellen Nachbarzellbeziehungen herauszufinden, die für ein Weiterreichen der Mobilfunkendgeräte 60a-d notwendig wären. Weitere Details über diese Prozeduren können auch in 3GPP TS 23.009 "Handover Procedures" gefunden werden. Eine permanente Suchprozedur würde jedoch eine zusätzliche Suchantenne und ein entsprechend zusätzliches Empfangsmodul am Relay-Sendeempfänger 30 erfordern, was zusätzliche Kosten nach sich ziehen könnte. Darüber hinaus könnten ein erhöhter Energieverbrauch und insgesamt ein größerer Bauraum für die VSC 30 resultieren.

Ausführungsbeispiele erlauben daher eine Implementierung einer ANRF in einem VSC-System 30, um die Nachbarzellbeziehungen von dem Anbindungs-Sendeempfänger 20 durchführen zu lassen. Die ANR-Funktion kann in dem Basisstations-Sendeempfänger 10 der VSC 30 implementiert sein und eine NR-Verwaltungsfunktion sowie eine Nachbarzelldetektionsfunktion und eine Nachbarzelllöschungsfunktion umfassen. Die Nachbarzelldetektionsfunktion detektiert neue Nachbarzellen und fügt diese der NRT zu. Die Nachbarzelllöschungsfunktion löscht abgelaufene Zellen, d.h. solche deren Signale unter eine gewisse Signalqualität gefallen sind, wieder aus der Nachbarzellliste.

Die ANR kann für Messungen auf der gleichen Frequenz, auch engl. "Intra-Frequency", oder auch für Messungen auf unterschiedlichen Frequenzen, auch engl. "Inter-Frequency", sowie auf gleichen oder unterschiedlichen Zugriffstechnologien, auch engl. "Intra-RAT" oder "Inter-RAT", Nachbarzellen durchgeführt werden. In Ausführungsbeispielen tauschen somit im Vergleich zum Stand der Technik das Mobilfunkendgerät mit dem Anbindungs-Sendeempfänger 20 zumindest teilweise ihre Rollen. Die Schnittstellen 14, 24 erlauben dabei die Kommunikation beispielsweise über ein entsprechendes Protokoll, das den Datenaustausch zwischen dem Basisstations-Sendeempfänger 10 und dem Anbindungs-Sendeempfänger 20 ermöglicht. Wie bereits oben erwähnt, können die Schnittstellen 14, 24 beispielsweise auf Ethernet, WLAN oder USB basieren. In einigen Ausführungsbeispielen kann die Verbindung zwischen dem Basisstations-Sendeempfänger 10 und dem Anbindungs-Sendeempfänger 20 auch über das IPsec-Protokoll erfolgen. Die Schnittstellen 14, 24 sind dann entsprechend ausgelegt, bzw. die Kontrolleinrichtungen 16, 26 sind ausgebildet, um entsprechend diesem Protokoll miteinander zu kommunizieren.

Ähnlich wie in konventionellen Systemen eine Basisstation ein Mobilendgerät konfiguriert, um Nachbarzellmessungen durchzuführen, kann in Ausführungsbeispielen der Basisstations-Sendeempfänger 10 auch ausgebildet sein, um Messungen beim Anbindungs-Sendeempfänger 20 direkt über die beschriebenen Schnittstellen 14, 24 zu konfigurieren und entsprechende Messergebnisse zu erhalten. In anderen Worten kann die Kontrolleinrichtung 16 des Basisstationsempfängers 10 ausgebildet sein, um Konfigurationsinformation bezüglich durchzuführender Messungen zu bestimmen und über Schnittstelle 14 an den Anbindungs-Sendeempfänger 20 zu ermitteln. Die Kontrolleinrichtung 26 des Anbindungs-Sendeempfängers 20 kann in analoger Weise ausgebildet sein, um die Konfigurationsinformation bezüglich durchzuführender Messungen über die Schnittstelle 24 von dem Basisstations-Sendeempfänger 10 zu erhalten.

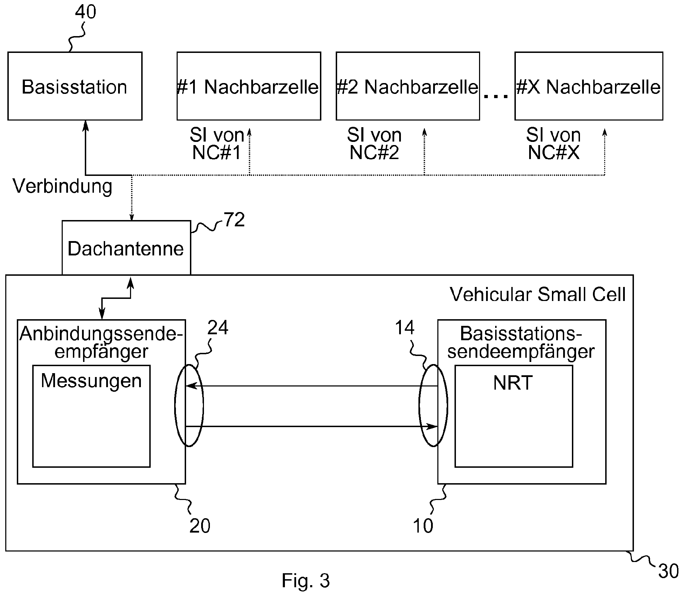

Die Fig. 3 illustriert ein Schaubild, welches den Ablauf der Messungen und der Konfiguration in einem Ausführungsbeispiel näher verdeutlichen soll. Die Fig. 3 zeigt den Relay-Sendeempfänger 30 mit dem Basisstations-Sendeempfänger 10 und dem Anbindungs-Sendeempfänger 20. Der Relay-Sendeempfänger 30 ist als VSC 30 implementiert. Der Basisstations-Sendeempfänger 10 ist als kleine Zelle, Small Cell, implementiert und verwaltet eine NRT, in der Nachbarschaftsbeziehungen mit verschiedenen Zellen gelistet sind. Der Basisstations-Sendeempfänger 10 kommuniziert über die Schnittstelle 14 mit der Schnittstelle 24 des Anbindungs-Sendeempfängers 20. Über die Schnittstellen 14, 24 können beispielsweise Konfigurationsinformation bezüglich Nachbarzellmessungen und Nachbarzellmessergebnisberichte kommuniziert werden. Der Anbindungs-Sendeempfänger 20 kommuniziert Messergebnisse an den Basisstations-Sendeempfänger 10. Wie die Fig. 3 zeigt, verwaltet der Anbindungs-Sendeempfänger 20 eine Messergebnisliste, die auch als engl."Measurement Report Log" bezeichnet werden kann.

Der Anbindungs-Sendeempfänger 20 stellt eine Anbindung an eine Makrozelle 40 über eine Dachantenne 72 bereit, wie dies schon anhand der Fig. 2 erläutert wurde. Die Fig. 3 zeigt ferner eine Anzahl von Nachbarzellen (auch engl. "Neighbour Cell (NC)"), Nachbarzelle #1, Nachbarzelle #2, ..., Nachbarzelle #X, von denen entsprechende Systeminformationen (SI) ausgelesen und in einer Messliste im Anbindungs-Sendeempfänger 20 verwaltet werden. Die entsprechenden Messberichte werden dann dem Basisstations-Sendeempfänger 10 bereitgestellt. Insofern ist der Basisstations-Sendeempfänger 10 auch in der Lage den Anbindungs-Sendeempfänger 20 direkt über die beschriebenen Schnittstellen 14, 24 anzusprechen und entsprechende Messungen zu konfigurieren bzw. Messergebnisse zu erhalten. Nachdem Messungen durchgeführt sind, kann der Anbindungs-Sendeempfänger 20 Nachbarzellinformationen an den Basisstations-Sendeempfänger 10 übermitteln. Der Basisstations-Sendeempfänger 10 kann somit die NRT, d.h. die Nachbarzellliste, verwalten und aktualisieren.

Ausführungsbeispiele können darüber hinaus standardisierte Systeminformationskapazitäten erweitern und beispielsweise die Kommunikationsfähigkeiten oder die Protokolle des Anbindungs-Sendeempfängers 10 erweitern. Beispielsweise könnte im Fall eines 3G-Anbindungs-Sendeempfängers 10, dessen Protokollschichten modifiziert werden, sodass Systeminformation, beispielsweise in Form von SystemInformationsBlocks (SIB) verfügbar gemacht werden, um beispielsweise den LAC, den RAC und die PLMN-IDs der gemessenen 3G-Nachbarzellen verfügbar zu machen, auch engl. "System Information (SI) Acquisition". Darüber hinaus erlauben die 3G-Protokollschichten des Anbindungs-Sendeempfängers 20 die Systeminformation von GSM-Nachbarzellen auszulesen und dementsprechend können die gefundenen GSM-Nachbarzellbeziehungen dem Basisstations-Sendeempfänger 10 berichtet werden.

Ferner können Ausführungsbeispiele ANRF insofern erweitern, als dass in verschiedenen Verbindungsmodi Messungen durchgeführt werden können. Insbesondere kann eine Radioressourcenkontrolle, auch engl. "Radio Resource Control (RRC)", entsprechend angepasst werden. In anderen Worten kann die Kontrolleinrichtung 26 des Anbindungs-Sendeempfängers 20 ausgebildet sein, um Konfigurationsinformation bezüglich durchzuführender Messungen zu empfangen, Messungen auch durchzuführen und zu kommunizieren, wenn eine Datenverbindung mit der Basisstation 40 des Mobilfunksystems 50 inaktiv ist. Der Anbindungs-Sendeempfänger 20 kann dann Nachbarzellbeziehungsinformation messen bzw. auslesen und diese Daten an den Basisstations-Sendeempfänger 10 übermitteln, auch wenn keine eigene Datenverbindung existiert, beispielsweise im sogenannten Leerlaufmodus, auch engl. "Idle Mode (3G und 4G)", sowie in den anderen definierten Modi, wie beispielsweise Cell-FACH, Cell-PCH, und URA-PCH gemäß den 3G Spezifikationen.

In manchen Ausführungsbeispielen, z.B. in einem LTE-Szenario, kann der Anbindungs-Sendeempfänger 20 ausgebildet sein, um in jedem RRC Zustand für Messungen konfiguriert zu werden und Messergebnisse an die Femtozelle (Basisstations-Sendempfänger 10) zu senden. Die Femtozelle könnte eine UE nur dann konfigurieren, wenn dieses eine Verbindung aufgebaut hat. Eine UE könnte nur Nachbarzellinformationen liefern, wenn sie aktiv ist. Insofern kann die Kontrolleinrichtung 26 des Anbindungs-Sendeempfängers 20 ausgebildet sein, um Konfigurationsinformation bezüglich durchzuführender Messungen zu empfangen, die Messungen durchzuführen und zu kommunizieren, wenn eine Datenverbindung mit der Basisstation 40 des Mobilfunksystems 50 aktiv und/oder inaktiv ist.

Generell können Ausführungsbeispiele eine verbesserte Mobilität ermöglichen, insbesondere für Mobilfunkendgeräte, die zwischen VSC und Makrobasisstation weitergereicht werden. Ausführungsbeispiele können dabei eine effiziente oder aufwandsgünstige Signalisierung ermöglichen, sodass Latenzzeiten, die bei der Weiterreichung von Mobilfunkendgeräten in Mobilfunksystemen auftreten können, reduziert werden können. Darüber hinaus kann der Stromverbrauch und die Leistungsaufnahme von Mobilfunkendgeräten, die der VSC zugeordnet sind, reduziert werden, was die Batterielaufzeiten erhöhen kann. Darüber hinaus kann Hardware auf Seiten des Relay-Sendeempfängers 30 eingespart werden und dessen Bauraum reduziert werden.

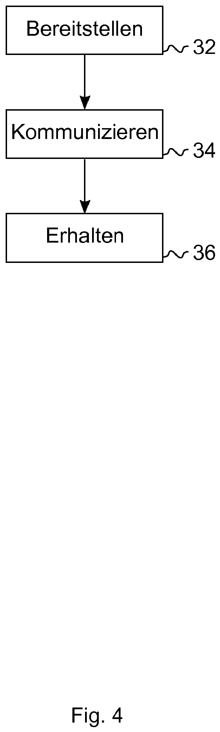

Fig. 4 zeigt ein Blockdiagramm eines Ausführungsbeispiels eines Verfahrens für einen Basisstations-Sendeempfänger 10 eines Relay-Sendeempfängers 30 in einem Mobilfunksystem 50. Der Relay-Sendeempfänger 30 umfasst einen Anbindungs-Sendeempfänger 20 zur Kommunikation mit einer Basisstation 40 des Mobilfunksystems. Das Verfahren umfasst ein Bereitstellen 32 eines Abdeckungsbereichs zur schnurlosen Kommunikation mit einem Mobilfunkendgerät 60. Das Verfahren umfasst ferner ein Kommunizieren 34 mit einem Anbindungs-Sendeempfänger 20 für den Relay-Sendeempfänger 30 und ein Erhalten 36 von Information über Messergebnisse, die auf Messungen von Signalen von Mobilfunkzellen basieren, von dem Anbindungs-Sendeempfänger 20 des Relay-Sendeempfängers 30.

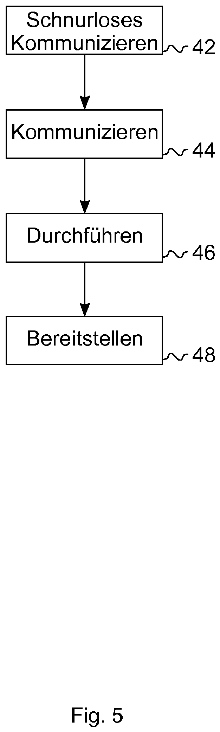

Fig. 5 zeigt ein Blockdiagramm eines Ausführungsbeispiels eines Verfahrens für einen Anbindungs-Sendeempfänger 20 eines Relay-Sendeempfängers 30 in einem Mobilfunksystem 50. Der Relay-Sendeempfänger 30 umfasst einen Basisstations-Sendeempfänger 10 zur Kommunikation mit einem Mobilfunkendgerät 60 des Mobilfunksystems 50. Das Verfahren umfasst ein schnurloses Kommunizieren 42 mit einer Basisstation 40 des Mobilfunksystems 50 und ein Kommunizieren 44 mit dem Basisstations-Sendeempfänger 10 für den Relay-Sendeempfänger 30. Das Verfahren umfasst ferner ein Durchführen 46 von Signalmessungen basierend auf Funksignalen von Mobilfunkzellen und ein Bereitstellen von Informationen über Messergebnisse an den Basisstations-Sendeempfänger 10 des Relay-Sendeempfängers 30.

Ausführungsbeispiele schaffen ferner ein Computerprogramm zur Durchführung zumindest eines der oben beschriebenen Verfahren, wenn das Computerprogramm auf einem Computer, einem Prozessor oder einer programmierbaren Hardwarekomponente abläuft.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Basisstations-Sendeempfänger
- 12: Sendeempfangseinrichtung
- 14: Schnittstelle
- 16: Kontrolleinrichtung
- 20: Anbindungs-Sendeempfänger
- 22: Sendeempfangseinrichtung
- 24: Schnittstelle
- 26: Kontrolleinrichtung
- 30: Relay-Sendeempfänger
- 32: Bereitstellen
- 34: Kommunizieren
- 36: Erhalten
- 40: Basisstation
- 42: Schnurloses Kommunizieren
- 44: Kommunizieren
- 46: Durchführen
- 48: Bereitstellen
- 50: Mobilfunksystem
- 60(a-d): Mobilfunkendgerät
- 70: Kraftfahrzeug
- 72: Dachantenne

## Patentansprüche

1. Ein Basisstations-Sendeempfänger (10) für einen mobilen Relay-Sendeempfänger (30) in einem Mobilfunksystem (50), wobei der Relay-Sendeempfänger (30) einen Anbindungs-Sendeempfänger (20) zur Kommunikation mit einer Basisstation (40) des Mobilfunksystems (50) umfasst, mit
einer Sendeempfangseinrichtung (12), die ausgebildet ist, um einen Abdeckungsbereich zur schnurlosen Kommunikation mit einem Mobilfunkendgerät (60) bereitzustellen;
einer Schnittstelle (14), die ausgebildet ist, um mit dem Anbindungs-Sendeempfänger (20) für den Relay-Sendeempfänger (30) zu kommunizieren; und
einer Kontrolleinrichtung (16), die ausgebildet ist, um Konfigurationsinformation bezüglich durchzuführender Messungen von Signalen von Mobilfunkzellen zur Nachbarzellendetektion für den mobilen Relay-Sendeempfänger zu bestimmen und über die Schnittstelle (14) an den Anbindungs-Sendeempfänger (20) zu übermitteln,
wobei die Kontroleinrichtung (16) ausgebildet ist, um von dem Anbindungs-Sendeempfänger (20) für den Relay-Sendeempfänger (30) über die Schnittstelle (14) Information über die Messergebnisse, die auf den Messungen von Signalen von Mobilfunkzellen zur Nachbarzelldetektion basieren, zu erhalten.

2. Basisstations-Sendeempfänger (10) gemäß Anspruch 1, bei dem die Kontrolleinrichtung (16) ferner ausgebildet ist, um anhand der Information über von dem Anbindungs-Sendeempfänger (20) erhaltene Messergebnisse eine Nachbarzellliste für eine Zelle des Basisstations-Sendeempfängers (10) zu erstellen und die Nachbarzellliste für das Mobilfunkgerät (60) zu verwenden, und wobei der Abdeckungsbereich für zumindest einen Innenraum eines Kraftfahrzeugs (70) ausgelegt ist.

3. Basisstations-Sendeempfänger (10) gemäß Anspruch 2, bei dem die Kontrolleinrichtung (16) ferner ausgebildet ist, um in der Nachbarzellliste Funkzellen zu erfassen, deren Messergebnisse eine Signalqualität über einer konfigurierbaren Schwelle anzeigen.

4. Basisstations-Sendeempfänger (10) gemäß einem der Ansprüche 2 oder 3, bei dem die Kontrolleinrichtung (16) ferner ausgebildet ist, um die Nachbarzellliste für eine Zelle des Basisstations-Sendeempfängers (10) sich durch eine Bewegung des Relay-Sendeempfängers (30) ändernden Nachbarzellen anzupassen, und/oder wobei wenigstens eine Zelle der Nachbarzellliste einem anderen Mobilfunksystem zugeordnet ist.

5. Basisstations-Sendeempfänger (10) gemäß einem der vorangehenden Ansprüche, bei dem die Schnittstelle (14) als Ethernet-Schnittstelle, als Wireless Local Area Network, WLAN, - Schnittstelle oder als Universal Serial Bus, USB, - Schnittstelle ausgebildet ist, und/oder wobei die Kontrolleinrichtung (16) ausgebildet ist, um über die Schnittstelle (14) mit dem Anbindungs-Sendeempfänger (20) mit dem Internet Protocol Security Protokoll, IPsec, zu kommunizieren.

6. Ein Anbindungs-Sendeempfänger (20) für einen mobilen Relay-Sendeempfänger (30) in einem Mobilfunksystem (50), wobei der Relay-Sendeempfänger (30) einen Basisstations-Sendeempfänger (10) zur Kommunikation mit einem Mobilfunkendgerät (60) des Mobilfunksystems (50) umfasst, mit
einer Sendeempfangseinrichtung (22), die ausgebildet ist, um schnurlos mit einer Basisstation (40) des Mobilfunksystems (50) zu kommunizieren;
einer Schnittstelle (24), die ausgebildet ist, um mit dem Basisstations-Sendeempfänger (10) des Relay-Sendeempfängers (30) zu kommunizieren; und
einer Kontrolleinrichtung (26), die ausgebildet ist, um Konfigurationsinformation bezüglich durchzuführender Messungen von Signalen von Mobilfunkzellen zur Nachbarzelldetektion für den mobilen Relay-Sendeempfänger über die Schnittstelle (24) vom Basisstations-Sendeempfänger (10) zu erhalten,
wobei die Kontroleinrichtung (26) ausgebildet ist, um über die Sendeempfangseinrichtung (22) die Signalmessungen basierend auf Funksignalen von Mobilfunkzellen zur Nachbarzelldetektion durchzuführen und dem Basisstations-Sendeempfänger (10) für den Relay-Sendeempfänger (30) über die Schnittstelle (24) Information über die Messergebnisse bereitzustellen.

7. Anbindungs-Sendeempfänger (20) gemäß Anspruch 6, wobei die Kontrolleinrichtung (26) ferner ausgebildet ist, um mit den Signalmessungen für eine Mobilfunkzelle Information über eine Identifikation der Mobilfunkzelle zu bestimmen und dem Basisstations-Sendeempfänger (10) über die Schnittstelle (24) Information über die Identifikation bereitzustellen, wobei die Sendeempfangseinrichtung (22) ausgebildet ist, um Information über die Mobilfunkzelle von der Basisstation (40) des Mobilfunksystems (50) zu empfangen.

8. Anbindungs-Sendeempfänger (20) gemäß einem der Ansprüche 6 oder 7, wobei die Kontrolleinrichtung (26) ferner ausgebildet ist, um über die Sendeempfangseinrichtung (22) Signalmessungen basierend auf Funksignalen von zumindest einer Mobilfunkzelle wenigstens eines anderen Mobilfunksystems durchzuführen.

9. Anbindungs-Sendeempfänger (20) gemäß einem der Ansprüche 6 bis 8, bei dem die Schnittstelle (24) als Ethernet-Schnittstelle, als Wireless Local Area Network, WLAN, - Schnittstelle oder als Universal Serial Bus, USB,- Schnittstelle ausgebildet ist, und/oder wobei die Kontrolleinrichtung (26) ausgebildet ist, um über die Schnittstelle (24) mit dem Basisstations-Sendeempfänger (10) mit dem Internet Protocol Security Protokoll, IPsec, zu kommunizieren.

10. Anbindungs-Sendeempfänger (20) gemäß einem der Ansprüche 6 bis 9, wobei die Kontrolleinrichtung (26) ausgebildet ist, um Konfigurationsinformation bezüglich durchzuführender Messungen zu empfangen, die Messungen durchzuführen und zu kommunizieren, auch wenn eine Datenverbindung mit der Basisstation (40) des Mobilfunksystems (50) inaktiv ist.

11. Ein Relay-Sendeempfänger (30) mit einem Basisstations-Sendeempfänger (10) gemäß Anspruch 1 und einem Anbindungs-Sendeempfänger (20) gemäß Anspruch 6.

12. Ein Kraftfahrzeug (70) mit einem Relay-Sendeempfänger (30) gemäß dem vorangehenden Anspruch.

13. Ein Verfahren für einen Basisstations-Sendeempfänger (10) eines mobilen Relay-Sendeempfängers (30) in einem Mobilfunksystem (50), wobei der Relay-Sendeempfänger (30) einen Anbindungs-Sendeempfänger (20) zur Kommunikation mit einer Basisstation (40) des Mobilfunksystems (50) umfasst, mit
Bereitstellen (32) eines Abdeckungsbereichs zur schnurlosen Kommunikation mit einem Mobilfunkendgerät (60);
Kommunizieren (34) mit einem Anbindungs-Sendeempfänger (20) für den Relay-Sendeempfänger (30);
Bestimmen von Konfigurationsinformation bezüglich durchzuführender Messungen von Signalen von Mobilfunkzellen zur Nachbarzellendetektion für den mobilen Relay-Sendempfänger; Übermitteln der Konfigurationsinformation an den Anbindungs-Sendeempfänger (20); und
Erhalten (36) von Information über Messergebnisse, die auf den Messungen von Signalen von Mobilfunkzellen basieren, von dem Anbindungs-Sendeempfänger (20) des Relay-Sendeempfängers (30).

14. Ein Verfahren für einen Anbindungs-Sendeempfänger (20) eines mobilen Relay-Sendeempfängers (30) in einem Mobilfunksystem (50), wobei der Relay-Sendeempfänger (30) einen Basisstations-Sendeempfänger (10) zur Kommunikation mit einem Mobilfunkendgerät (60) des Mobilfunksystems (50) umfasst, mit
schnurlosem Kommunizieren (42) mit einer Basisstation (40) des Mobilfunksystems (50);
Kommunizieren (44) mit dem Basisstations-Sendeempfänger (10) des Relay-Sendeempfängers (30);
Erhalten von dem Basisstations-Sendeempfänger (10) Konfigurationsinformation bezüglich durchzuführender Messungen von Signalen von Mobilfunkzellen zur Nachbarzelldetektion für den mobilen Relay-Sendeempfänger; Durchführen (46) der Signalmessungen basierend auf Funksignalen von Mobilfunkzellen; und
Bereitstellen (48) von Information über die Messergebnisse an den Basisstations-Sendeempfänger (10) des Relay-Sendeempfängers (30).

15. Computerprogramm zur Durchführung zumindest eines der Verfahren der Ansprüche 13 oder 14, wenn das Computerprogramm auf einem Computer, einem Prozessor oder einer programmierbaren Hardwarekomponente abläuft.

## Claims

1. A base station transceiver (10) for a mobile relay transceiver (30) in a mobile radio system (50), the relay transceiver (30) comprising a connection transceiver (20) for communicating with a base station (40) of the mobile radio system (50), comprising
a transceiving device (12) configured to provide a coverage area for wireless communication with a mobile radio terminal device (60);
an interface (14) configured to communicate with the connection transceiver (20) for the relay transceiver (30); and
a control device (16) configured to determine configuration information with respect to measurements to be performed of signals from mobile radio cells for neighbor cell detection for the mobile relay transceiver and to transmit them via the interface (14) to the connection transceiver (20),
wherein the control device (16) is configured to obtain, from the connection transceiver (20) for the relay transceiver (30), information about the measurement results which are based on the measurements of signals from mobile radio cells for neighbor cell detection via the interface (14).

2. The base station transceiver (10) according to claim 1, wherein the control device (16) is further configured to create a neighbor cell list for a cell of the base station transceiver (10) by means of the information about measurement results obtained from the connection transceiver (20) and to use the neighbor cell list for the mobile radio device (60), and wherein the coverage area is designed for at least one interior of a motor vehicle (70).

3. The base station transceiver (10) according to claim 2, wherein the control device (16) is further configured to detect, in the neighbor cell list, radio cells whose measurement results indicate a signal quality above a configurable threshold.

4. The base station transceiver (10) according to any of claims 2 or 3, wherein the control device (16) is further configured to adapt the neighbor cell list for a cell of the base station transceiver (10) to neighbor cells which are changing due to a movement of the relay transceiver (30), and/or wherein at least one cell of the neighbor cell list is assigned to another mobile radio system.

5. The base station transceiver (10) according to any of the preceding claims, wherein the interface (14) is configured as an Ethernet interface, a Wireless Local Area Network, WLAN, interface or a Universal Serial Bus, USB, interface, and/or wherein the control device (16) is configured to communicate via the interface (14) with the connection transceiver (20) using the Internet Protocol Security Protocol, IPsec.

6. A connection transceiver (20) for a mobile relay transceiver (30) in a mobile radio system (50), the relay transceiver (30) comprising a base station transceiver (10) for communicating with a mobile radio terminal device (60) of the mobile radio system (50), comprising
a transceiving device (22) configured to communicate wirelessly with a base station (40) of the mobile radio system (50);
an interface (24) configured to communicate with the base station transceiver (10) of the relay transceiver (30); and
a control device (26) configured to obtain configuration information with respect to measurements to be performed of signals from mobile radio cells for neighbor cell detection for the mobile relay transceiver from the base station transceiver (10) via the interface (24),
wherein the control device (26) is configured to perform, via the transceiving device (22), the signal measurements based on radio signals from mobile radio cells for neighbor cell detection and to provide information about the measurement results to the base station transceiver (10) for the relay transceiver (30) via the interface (24).

7. The connection transceiver (20) according to claim 6, wherein the control device (26) is further configured to determine, with the signal measurements for a mobile radio cell, information about an identification of the mobile radio cell, and to provide information about the identification to the base station transceiver (10) via the interface (24), wherein the transceiving device (22) is configured to receive information about the mobile radio cell from the base station (40) of the mobile radio system (50).

8. The connection transceiver (20) according to any of claims 6 or 7, wherein the control device (26) is further configured to perform, via the transceiving device (22), signal measurements based on radio signals from at least one mobile radio cell of at least one other mobile radio system.

9. The connection transceiver (20) according to any of claims 6 to 8, wherein the interface (24) is configured as an Ethernet interface, a Wireless Local Area Network, WLAN, interface or a Universal Serial Bus, USB, interface, and/or wherein the control device (26) is configured to communicate via the interface (24) with the base station transceiver (10) using the Internet Protocol Security Protocol, IPsec.

10. The connection transceiver (20) according to any of claims 6 to 9, wherein the control device (26) is configured to receive configuration information with respect to measurements to be performed, to perform the measurements and to communicate even when a data connection with the base station (40) of the mobile radio system (50) is inactive.

11. A relay transceiver (30) comprising a base station transceiver (10) according to claim 1 and a connection transceiver (20) according to claim 6.

12. A motor vehicle (70) comprising a relay transceiver (30) according to the preceding claim.

13. A method for a base station transceiver (10) of a mobile relay transceiver (30) in a mobile radio system (50), the relay transceiver (30) comprising a connection transceiver (20) for communicating with a base station (40) of the mobile radio system (50), comprising
providing (32) a coverage area for wireless communication with a mobile radio terminal device (60);
communicating (34) with a connection transceiver (20) for the relay transceiver (30);
determining configuration information with respect to measurements to be performed of signals from mobile radio cells for neighbor cell detection for the mobile relay transceiver;
transmitting the configuration information to the connection transceiver (20); and
obtaining (36) information about measurement results which are based on the measurements of signals from mobile radio cells from the connection transceiver (20) of the relay transceiver (30).

14. A method for a connection transceiver (20) of a mobile relay transceiver (30) in a mobile radio system (50), the relay transceiver (30) comprising a base station transceiver (10) for communicating with a mobile radio terminal device (60) of the mobile radio system (50), comprising
wirelessly communicating (42) with a base station (40) of the mobile radio system (50);
communicating (44) with the base station transceiver (10) of the relay transceiver (30);
obtaining, from the base station transceiver (10), configuration information with respect to measurements to be performed of signals from mobile radio cells for neighbor cell detection for the mobile relay transceiver;
performing (46) the signal measurements based on radio signals from mobile radio cells; and
providing (48) information about the measurement results to the base station transceiver (10) of the relay transceiver (30).

15. A computer program for performing at least one of the methods of claims 13 or 14 when the computer program is running on a computer, a processor, or a programmable hardware component.

## Revendications

1. Emetteur-récepteur de station de base (10) pour un émetteur-récepteur de relais mobile (30) dans un système radio mobile (50), l'émetteur-récepteur de relais (30) comprenant un émetteur-récepteur de connexion (20) pour communiquer avec une station de base (40) du système radio mobile (50), comprenant
un dispositif d'émission-réception (12) configuré pour fournir une zone de couverture pour une communication sans fil avec un terminal radio mobile (60) ;
une interface (14) configurée pour communiquer avec l'émetteur-récepteur de connexion (20) pour l'émetteur-récepteur de relais (30) ; et
un dispositif de contrôle (16) configuré pour déterminer une information de configuration relative à des mesures à réaliser de signaux de cellules radio mobiles pour une détection de cellules voisines pour l'émetteur-récepteur de relais mobile et pour les transmettre à l'émetteur-récepteur de connexion (20) à travers l'interface (14),
le dispositif de contrôle (16) étant configuré pour obtenir, de l'émetteur-récepteur de connexion (20) pour l'émetteur-récepteur de relais (30), une information sur les résultats de mesure basés sur les mesures de signaux de cellules radio mobiles pour une détection de cellules voisines à travers l'interface (14).

2. Emetteur-récepteur de station de base (10) selon la revendication 1, le dispositif de contrôle (16) étant en outre configuré pour établir une liste de cellules voisines pour une cellule de l'émetteur-récepteur de station de base (10) à l'aide de l'information sur des résultats de mesure obtenus de l'émetteur-récepteur de connexion (20) et pour utiliser la liste de cellules voisines pour le terminal radio mobile (60), et la zone de couverture étant conçue pour au moins un habitacle d'un véhicule à moteur (70).

3. Emetteur-récepteur de station de base (10) selon la revendication 2, le dispositif de contrôle (16) étant en outre configuré pour détecter dans la liste de cellules voisines des cellules radio dont les résultats de mesure indiquent une qualité de signal supérieure à un seuil configurable.

4. Emetteur-récepteur de station de base (10) selon l'une des revendications 2 ou 3, le dispositif de contrôle (16) étant en outre configuré pour adapter la liste de cellules voisines pour une cellule de l'émetteur-récepteur de station de base (10) à des cellules voisines changeantes par un mouvement de l'émetteur-récepteur de relais (30), et/ou au moins une cellule de la liste de cellules voisines étant associée à un autre système radio mobile.

5. Emetteur-récepteur de station de base (10) selon l'une des revendications précédentes, l'interface (14) étant configurée comme une interface Ethernet, une interface de réseau local sans fil, WLAN, ou une interface de bus série universel, USB, et/ou le dispositif de contrôle (16) étant configuré pour communiquer à travers l'interface (14) avec l'émetteur-récepteur de connexion (20) en utilisant le protocole de sécurité de protocole Internet, IPsec.

6. Emetteur-récepteur de connexion (20) pour un émetteur-récepteur de relais mobile (30) dans un système radio mobile (50), l'émetteur-récepteur de relais (30) comprenant un émetteur-récepteur de station de base (10) pour une communication avec un terminal radio mobile (60) du système radio mobile (50), comprenant
un dispositif d'émission-réception (22) configuré pour communiquer sans fil avec une station de base (40) du système radio mobile (50) ;
une interface (24) configurée pour communiquer avec l'émetteur-récepteur de station de base (10) de l'émetteur-récepteur de relais (30) ; et
un dispositif de contrôle (26) configuré pour obtenir une information de configuration relative à des mesures à réaliser de signaux de cellules radio mobiles pour une détection de cellules voisines pour l'émetteur-récepteur de relais mobile de l'émetteur-récepteur de station de base (10) à travers l'interface (24),
le dispositif de contrôle (26) étant configuré pour réaliser, à travers le dispositif d'émission-réception (22), les mesures de signaux sur la base de signaux radio de cellules radio mobiles pour une détection de cellules voisines et pour fournir à l'émetteur-récepteur de station de base (10) pour l'émetteur-récepteur de relais (30) une information sur les résultats des mesure à travers l'interface (24).

7. Emetteur-récepteur de connexion (20) selon la revendication 6, le dispositif de contrôle (26) étant en outre configuré pour déterminer, avec les mesures de signaux pour une cellule radio mobile, une information sur une identification de la cellule radio mobile et pour fournir une information sur l'identification à l'émetteur-récepteur de station de base (10) à travers l'interface (24), le dispositif d'émission-réception (22) étant configuré pour recevoir une information sur la cellule radio mobile de la station de base (40) du système radio mobile (50).

8. Emetteur-récepteur de connexion (20) selon l'une des revendications 6 ou 7, le dispositif de contrôle (26) étant en outre configuré pour réaliser, à travers le dispositif d'émission-réception (22), des mesures de signaux sur la base de signaux radio d'au moins une cellule radio mobile d'au moins un autre système radio mobile.

9. Emetteur-récepteur de connexion (20) selon l'une des revendications 6 à 8, l'interface (24) étant configurée comme une interface Ethernet, une interface de réseau local sans fil, WLAN, ou une interface de bus série universel, USB, et/ou le dispositif de contrôle (26) étant configuré pour communiquer à travers l'interface (24) avec l'émetteur-récepteur de station de base (10) en utilisant le protocole de sécurité de protocole Internet, IPsec.

10. Emetteur-récepteur de connexion (20) selon l'une des revendications 6 à 9, le dispositif de contrôle (26) étant configuré pour recevoir une information de configuration relative à des mesures à réaliser, pour réaliser les mesures et pour communiquer même lorsqu'une liaison de données avec la station de base (40) du système radio mobile (50) est inactive.

11. Emetteur-récepteur de relais (30) comprenant un émetteur-récepteur de station de base (10) selon la revendication 1 et un émetteur-récepteur de connexion (20) selon la revendication 6.

12. Véhicule à moteur (70) comprenant un émetteur-récepteur de relais (30) selon la revendication précédente.

13. Procédé d'un émetteur-récepteur de station de base (10) d'un émetteur-récepteur de relais mobile (30) dans un système radio mobile (50), l'émetteur-récepteur de relais (30) comprenant un émetteur-récepteur de connexion (20) pour communiquer avec une station de base (40) du système radio mobile (50), comprenant
fourniture (32) d'une zone de couverture pour une communication sans fil avec un terminal radio mobile (60) ;
communication (34) avec un émetteur-récepteur de connexion (20) pour l'émetteur-récepteur de relais (30) ;
détermination d'une information de configuration relative à des mesures à réaliser de signaux de cellules radio mobiles pour une détection de cellules voisines pour l'émetteur-récepteur de relais mobile ;
transmission de l'information de configuration à l'émetteur-récepteur de connexion (20) ; et
obtention (36) d'une information sur des résultats de mesure basées sur les mesures de signaux de cellules radio mobiles de l'émetteur-récepteur de connexion (20) de l'émetteur-récepteur de relais (30).

14. Procédé pour un émetteur-récepteur de connexion (20) d'un émetteur-récepteur de relais mobile (30) dans un système radio mobile (50), l'émetteur-récepteur de relais (30) comprenant un émetteur-récepteur de station de base (10) pour communiquer avec un terminal radio mobile (60) du système radio mobile (50), comprenant
communication sans fil (42) avec une station de base (40) du système radio mobile (50) ;
communication (44) avec l'émetteur-récepteur de station de base (10) de l'émetteur-récepteur de relais (30) ;
obtention, de l'émetteur-récepteur de station de base (10), d'une information de configuration relative à des mesures à réaliser de signaux de cellules radio mobiles pour une détection de cellules voisines pour l'émetteur-récepteur de relais mobile ;
réalisation (46) des mesures de signaux sur la base de signaux radio de cellules radio mobiles ; et
fourniture (48) d'une information sur les résultats de mesure à l'émetteur-récepteur de station de base (10) de l'émetteur-récepteur de relais (30).

15. Programme d'ordinateur pour réaliser au moins un des procédés selon les revendications 13 ou 14 lorsque le programme d'ordinateur est exécuté sur un ordinateur, un processeur ou un composant matériel programmable.
